# EUROPÄISCHE PATENTSCHRIFT

(11) **EP 0 640 539 B1**
(45) Veröffentlichungstag und Bekanntmachung des Hinweises auf die Patenterteilung: **28.10.1998**
(21) Anmeldenummer: 94111842.4
(22) Anmeldetag: 29.07.1994
(51) Int. Cl.: B65G 11/16, C21B 7/20

(54) **Verteilerschurre für Schüttgut**
Charge distribution chute for bulk material
Goulotte de distribution pour matières en vrac

(30) Priorität: 25.08.1993 LU 88396
(43) Veröffentlichungstag der Anmeldung: 01.03.1995
(73) Patentinhaber: PAUL WURTH S.A., 1122 Luxembourg (LU)
(72) Erfinder: Lonardi, Emile, L-4945 Bascharage (LU); Bernard, Gilbert, L-7382 Helmdange (LU); Cimenti, Giovanni, L-5825 Fentange (LU); Andonov, Radomir, L-8215 Mamer (LU); Hollman, Joseph, L-8333 Olm (LU); Thillen, Guy, L-9266 Diekirch (LU)
(74) Vertreter: Freylinger, Ernest T.

(56) Entgegenhaltungen:
- DE-A- 2 325 531
- DE-A- 2 629 782
- DE-A- 3 406 683
- DE-A- 4 216 166
- DE-C- 3 729 295
- SOVIET PATENTS ABSTRACTS Section Ch, Week 8910, 19. April 1989 Derwent Publications Ltd., London, GB; Class M24, AN 89-075484 & SU-A-1 420 026 (DON FERR METAL) 30. August 1988

## Beschreibung

Die Erfindung betrifft eine Verteilerschurre für Schüttgut, insbesondere für den Einsatz in einer glockenlosen Hochhofenbegichtungsanlage, mit einem Aufprallabschnitt und einem Gleitabschnitt für das Schüttgut.

Es ist bekannt, dass in glockenlosen Hochofenbegichtungsanlagen das Beschickungsgut in dosierten Mengen vom einem Zwischenbunker über einen vertikal angeordneten zentralen Einlauf, auf eine zentral im Hochofenkopf angeordnete, drehbare und winkelverstellbare Verteilerschurre gelangt, die das Beschickungsgut im Hochofen verteilt. Das Beschickungsgut, das bekanntlich aus Erz, Koks, Sinter usw. besteht, enthält harte, scharfkantige Schuttgüter, die an die Aufprall- und Rutschflächen der Anlage hohe Anforderungen stellen. Besonders die Verteilerschurre ist einem hohen Verschleiss ausgesetzt, da das Schüttgut von dem zentralen Einlauf mit einer nicht geringen Geschwindigkeit auf die Verteilerschurre aufprallt, von der Schurre einer Richtungsänderung unterworfen wird und mit hoher Geschwindigkeit über dieselbe abrutscht. Der hohe Verschleiss erfordert einen häufigen Wechsel der Verteilerschurre, welcher mit hohen Kosten verbunden ist und einen Stillstand des Hochofenbetriebes bedingt.

Aus der deutschen Patentschrift DE-A-23 25 531 ist eine Verteilerschurre einer glockenlosen Hochofenbegichtungsanlage bekannt, die einen Aussenmantel aus hitzebeständigem Stahl und eine Auskleidung aus einzelnen, am Aussenmantel lösbar befestigten Verschleissplatten aufweist. Die Verschleissplatten haben annähernd die Querschnittsform des Aussenmantels und sind derart schuppenartig angeordnet, dass in der Materialflussrichtung der untere Plattenteil gegenüber dem oberen Plattenteil herrausragt, und mindestens zwei Plattenteile an jeder Stelle der Schurre übereinander liegen. Diese Verschleissplatten bestehen dabei aus einer Trägerplatte aus einem dickwandigen, hitzebeständigen Stahlblech. Auf die Trägerplatte ist eine Schicht aus abriebfestem Hartmaterial aufgeschweisst.

Um die Abnutzung der Verschleissplatten der Verteilerschurre nach DE-A-23 25 531 zu vermindern, schlägt die deutsche Patentschrift DE-A-26 29 782 vor, die Verschleissplatten mit Stauelementen zu versehen, welche einen Teil des Hochofenfüllgutes abfangen so dass die Verschleissplatten dauernd mindestens teilweise mit Füllgut bedeckt sind. Die Stauelemente werden entsprechend der Patentschrift DE-A-26 29 782 durch Aufschweissen eines Grates senkrecht auf die Oberfläche der sich überlappenden Verschleissplatten hergestellt. In der Praxis hat man jedoch festgestellt, dass besonders im Aufprallabschnitt der Verteilerschurre die sich überlappenden Verschleisselemente nur sehr unvollkommen durch die aufgeschweissten Grate geschützt werden. Diese aufgeschweissten Grate wirken hauptsächlich im Gleitabschnitt der Schurre, indem sie die Gleitgeschwindigkeit des Schüttguts in direkter Nachbarschaft der Oberfläche der Verschleissplatten herabsetzen. Im Gleitbereich der Schurre haben die Grate jedoch auch eine nachteilige Wirkung auf die Bündelung des Schüttgutstrahls. In Bezug auf die aus DE-A-23 25 531 bekannten Schurren ist weiterhin anzumerken, dass die Herstellung der sich überlappenden Verschleissplatten kostspielig ist und, dass durch die teilweise dreifache Überlappung der einzelnen Verschleissplatten das Gewicht der Verteilerschurre natürlich stark erhöht wird.

Aufgabe der vorliegenden Erfindung ist es eine Verteilerschurre der eingangs beschriebenen Gattung vorzuschlagen, welche auch ohne sich überlappende Verschleissplatten im Aufprallabschnitt einen ausgezeichneten Verschleissschutz aufweist.

Diese Aufgabe wird erfindungsgemäss durch die Merkmale des Anspruchs 1 gelöst.

Ein wesentlicher Vorteil der erfindungsgemässen Schurre besteht darin, dass mit geringem Materialaufwand, im Vergleich zu den bekannten Schurren, eine ausgezeichnete Verschleissfestigkeit im Aufprallabschnitt erreicht wird. Bei starker Neigung der Verteilerschurre (d.h. in einer Stellung in der die Verteilerschurre fast vertikal steht) bewirkt das Schüttgut in den Rückhaltetaschen eine wirksame Dämpfung des Aufpralls des nachfallenden Schüttguts. In dieser Stellung der Verteilerschurre sind ausschließlich die weitgehend verschleissfesten Oberkanten der Querlamellen durch das aufprallende Schüttgut beansprucht. Die die weitgehend verschleissfesten Aussenflächen der geneigten Querlamellen sind dem aufprallenden Schüttgut nicht direkt ausgesetzt. Die Oberfläche der Verteilerschurre zwischen den Querlamellen, sowie die Innenflächen der Querlamellen sind grösstenteils durch das Schüttgut in den Rückhaltetaschen geschützt. Wird die Verteilerschurre aus einer stark geneigten Position in eine weniger stark geneigte Position geschwenkt (d.h. die Verteilerschurre wird horizontaler eingestellt), entleeren sich die vollen Rückhaltetaschen teilweise in den Restbereich der Rückhaltekammern und bedecken somit progressiv, zuerst den gegebenenfalls noch freiliegenden Teil der Oberfläche der Verteilerschurre zwischen den Querlamellen, dann die weitgehend verschleissfesten Aussenflächen der Querlamellen. Die Oberfläche der Schurre in den Rückhaltekammern, sowie die Aussenflächen der Querlamellen (zumindest teilweise) werden dabei durch das sich aus den Rückhaltetaschen ergiessende Schüttgut weitgehend gegen aufprallende Partikel geschützt. Um eine ausreichende Anfangs-Überdeckung zu erreichen, macht das Nettovolumen einer Rückhaltetasche mindestens 20 % des Nettovolumens der zugeordneten Rückhaltekammer aus. Das nachströmende Schüttgut füllt die Rückhaltekammern weiter auf. Wird die Schurre wieder stärker geneigt fliesst ein Teil des aufgefangenen Schüttguts wieder in die Rückhaltetaschen. Es entsteht demnach durch Änderung der Schurrenneigung eine reversible Materialverlagerung zwischen Rückhaltetasche und Restbereich der Rückhaltekammer, wobei das Material sich stets in ausreichender Menge dort befindet wo es am wirkungsvollsten für den Verschleisschutz eingestzt wird. Es bleibt anzumerken, dass der grösste Teil der Verschleissfestigkeit im Aufprallabschnitt bei der erfindungsgemässen Schurre durch das Material in den Rückhaltetaschen, respektiv Rückhaltekammern erreicht wird. Man benötigt nur relativ kleine Flächen die weitgehend verschleissfest ausgeführt werden müssen, was natürlich die Konstruktion einer wesentlich leichteren und billigeren Schurre erlaubt.

Es hat sich als vorteilhaft erwiesen, wenn die Rückhaltetaschen einen Öffnungswinkel zwischen 40 und 60° zur Oberfläche der Schurre aufweisen. Die Breite der freien Öffnung der Rückhaltekammern ist vorteilhaft grösser als der grösste, statistisch relevante Korndurchmesser des Schüttguts. Dadurch wird eine einwandfreies Auffüllen der Rückhaltekammern gewährleistet.

Die Rückhaltekammern sind vorteilhaft durch Längslamellen unterteilt. Letztere verstärken die Querlamellen. Durch die Segmentierung der Rückhaltekammern erreicht man auch ein gleichmässigeres Auffüllen der Rückhaltekammern in den seitlichen Bereichen der Schurre.

Um einen gebündelten, möglichst homogenen Schüttgutstrahl beim Verlassen des Gleitabschnitts der Verteilerschurre zu erzielen, weist die Verteilerschurre, zumindest im Auslaufbereich des Gleitabschnitts, eine weitgehend glatte und verschleissfeste Auslauffläche auf. Dadurch dass die Auslauffläche, in einer vorteilhaften Ausgestaltung der Verteilerschurre, eine durch die Oberkanten der Querlamellen definierte Fliessfläche ohne Übergangssprung verlängert, wird die Verschleissbeanspruchung dieser Auslauffläche wesentlich vermindert. Das Schüttgut gleitet kontinuierlich aus dem Aufprallabschnitt in den Gleitabschnitt über.

Zwischen der Auslauffläche und dem eigentlichen Schurrenkörper befinden sich vorteilhaft Hohlkammern. Diese Hohlkammern haben den Vorteil, dass sie sich bei einem Durchbruch der Auslauffläche mit Schüttgut auffüllen, wobei das Schüttgut in den Hohlkammern dann den Schurrenkörper gegen einen Verschleiss schützt. Diese Hohlkammern sind vorteilhaft mit einem thermischen Isolationsmaterial aufgefüllt. Dadurch wird bei Einsatz der Schurre in einem Ofen (zum Beispiel einem Hochofen), die Auslauffläche thermisch weitgehend vom heissen Schurrenkörper der Schurre isoliert, was sich vorteilhaft auf die Standzeit der Auslauffläche auswirkt.

In einer anderen Ausführungsvariante werden die Rückhaltekammern mit einer giessbaren, aushärtenden Masse aufgefüllt, wobei diese Masse, im ausgehärteten Zustand, weniger verschleissfest als die Oberkanten und Aussenflächen der Querlamellen sein kann. Selbst wenn die ausgehärtete Masse schneller als die Querlamellen zerstört wird, hat dies keine wesentlichen Nachteile auf die Standzeit der Verteilerschurre. Löcher die gegebenenfalls in der Auffüllmasse entstehen, füllen sich sofort mit Schüttgut, respektiv mit Bruchstücken des Auffüllmaterials wieder auf. Ein Vorteil der ausgegossenen Rückhaltekammern ist, dass so lange die Auffüllung weitgehend intakt ist, die Gleiteigenschaften im Aufprallabschnitt verbessert sind. Natürlich können in die Rückhaltkammern auch entsprechende Formsteine anstelle der Ausgiessmasse eingefüllt werden.

Ausführungsbeispiele der Erfindung werden anhand der Zeichnungen beschrieben. Es zeigen:
- Figur 1 einen Längsschnitt durch eine erste Ausführung einer erfindungsgemässen Verteilerschurre;
- Figur 2A, 2B, 2C Details der Verteilerschurre nach Figur 1, für verschiedene Neigungswinkel der Verteilerschurre;
- Figur 3 einen Längsschnitt durch eine zweite Ausführung einer erfindungsgemässen Verteilerschurre;
- Figur 4 eine Querschnitt durch die Verteilerschurre der Figur 2.

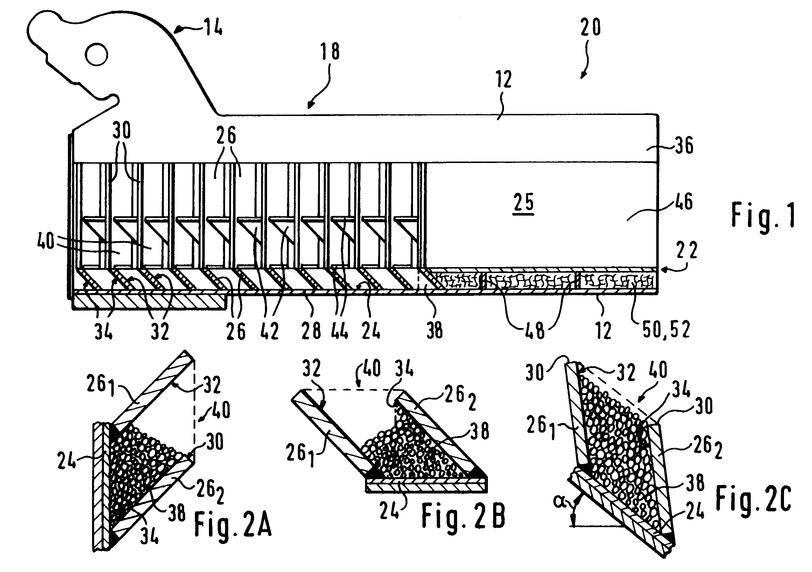

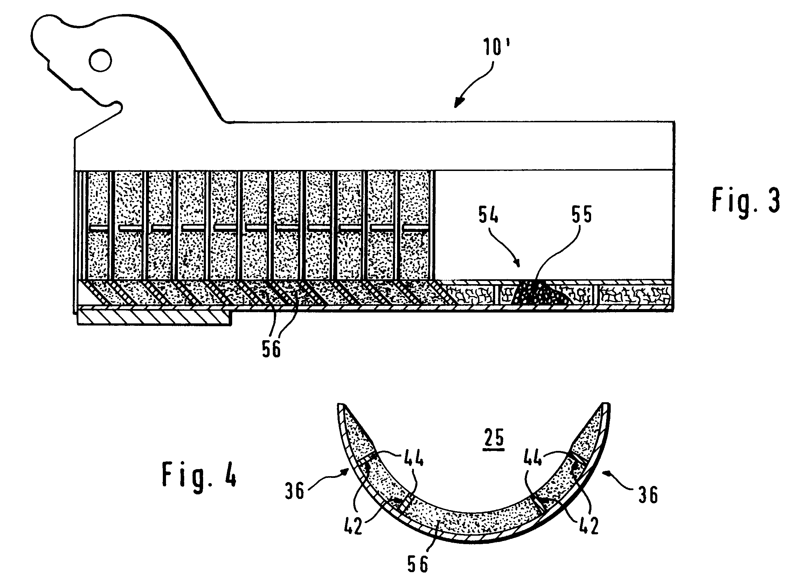

Die Verteilerschurre 10,10', welche in den Figuren 1 und 3 gezeigt ist, weist einen Schurrenkörper 12 mit einem halbkreisförmigen Querschnitt auf (siehe Figur 4). Selbstverständlich könnte der Schurrenquerschnitt zum Beispiel auch oval, trapezförmig oder dreieckig sein. Die Schurre könnte ebenfalls nur an einer Seite durch eine Seitenfläche begrenzt sein, respektiv überhaupt keine Seitenfläche aufweisen.

An einem ersten Ende weist der gezeigte Schurrenkörper 12 eine beidseitige Aufhängevorrichtung 14 zum Aufhängen der Verteilerschurre 10,10' in eine nicht gezeigte Antriebsvorrichtung auf. Diese Antriebsvorrichtung bewirkt eine Schwenkung der Schurre 10,10' um eine horizontale Achse, um den Neigungswinkel der Schurre einzustellen, und gegebenenfalls eine Drehbewegung der Schurre um eine vertikale Achse, um das Schüttgut auf eine kreisförmige Fläche zu verteilen.

Die Schurre 10,10' weist einen Aufprallabschnitt 18 und einen Gleitabschnitt 20 auf. Der Aufprallabschnitt 18 befindet sich unter einer Einlaufvorrichtung für das Schüttgut (nicht gezeigt) und hat als Aufgabe das einlaufende Schüttgut aufzufangen und zum Gleitabschnitt 20 umzulenken. Eine statistisch definierbare Aufprallzone des Schüttgutstrahls ändert dabei ihre Position innerhalb des Aufprallabschnitts 18 in Funktion der Neigung der Schurre 10,10'. Im Sinne der vorliegenden Beschreibung ist daher der Aufprallabschnitt 18 als derjenige Abschnitt der Schurre 10,10' definiert, in dem sich die statistisch definierte Aufprallzone des Schüttgutstrahls befinden kann. Der Gleitabschnitt 20 schliesst sich dem Aufprallabschnitt 18 an und hat als Aufgabe das umgelenkte Schüttgut zu bündeln und über eine Auslaufnase 22 in einem möglichst gebündelten Strahl auszuschütten. Die Länge der eigentlichen Gleitstrecke hängt natürlich von der Neigung der Schurre 10,10' ab. Im Sinne der vorliegenden Beschreibung ist daher der Gleitabschnitt 20 als derjenige Abschnitt der Schurre 10,10' definiert, der ausschließlich zu Gleitzwecken dient, das heisst der Gleitabschnitt 20 entspricht demjenigen Abschnitt der Schurre 10,10' der sich zwischen dem Aufprallabschnitt 18 und der Auslaufnase 22 erstreckt.

Im Aufprallabschnitt 18 weist die Schurre 10,10', auf einer inneren Oberfläche 24 des eigentlichen Schurrenkanals 25, mehrere Querlamellen 26 auf. Diese Querlamellen 26 können direkt als Bestandteile des Schurrenkörpers 12 ausgebildet sein, respektiv einzeln darauf befestigt sein, oder Bestandteile eines in die Schurre 10,10' eingesetzten und darin befestigten Tragkörpers 28 sein, respektiv auf diesem Tragkörper befestigt sein, wobei letzterer dem inneren Querschnitt des Schurrenkörpers angepasst ist. Sie weisen eine Oberkante 30, eine äussere Fläche 32 und eine innere Fläche 34 auf. Auf die Oberkante 30 und die äussere Fläche 32 ist dabei vorteilhaft eine Schicht aus verschleissfestem Hartmaterial aufgeschweisst. Die innere Fläche 34 kann ebenfalls gegen Verschleiss geschützt sein, dies muss jedoch nicht unbedingt der Fall sein. Selbstverständlich können die Querlamellen 26 auch integral aus einem Werkstoff bestehen der eine relativ hohe Verschleissfestigkeit aufweist.

Die Querlamellen 26 erstrecken sich quer zur Fliessrichtung bis in die Seitenwände 36 der Schurre 10,10'. Sie sind in entgegengesetzter Richtung des Schüttgutflusses derart geneigt, dass sie zwischen ihrer Innenfläche 34 und der inneren Oberfläche 24 der Schurre 10,10' jeweils eine Rückhaltetasche 38 ausbilden (siehe Figuren 2A, 2B, 2C). Der Öffnungswinkel dieser Rückhaltetaschen beträgt dabei zirka 45°. Zwei benachbarte Querlamellen 26₁, 26₂ bilden zwischen der Aussenfläche 32 der ersten Querlamelle 26₁ und der Innenfläche 34 der zweiten Querlamelle 26₂ eine Rückhaltekammer 40 aus (siehe gestrichelte Abgrenzungslinie). Die Rückhaltetasche 38 bildet dabei einen Teilbereich der Rückhaltekammer 40, wobei das Nettovolumen dieses Teilbereichs in der dargestellten Ausführung ungefähr 40% des Nettovolumens der Rückhaltekammer 40 ausmacht.

In der Ausführung nach Figur 1 bleiben selbst bei vertikaler Stellung der Schurre 10 (siehe Figur 2A) die Rückhaltetaschen 38 mit Schüttgut gefüllt. Dieses Schüttgut bewirkt eine ausgezeichnete Dämpfung des nachfallenden Schüttguts. Nur die Oberkante 30 wird durch das aufprallende Schüttgut beansprucht. Die innere Fläche 34 der Querlamelle 26₂ ist vollständig mit Schüttgut bedeckt. Durch den Böschungswinkel des Schüttguts in der Rückhaltetasche 38 ist die Oberfläche der Verteilerschurre ebenfalls vollständig mit Schüttgut bedeckt. Der grösste Teil der äusseren Fläche 32 der Querlamelle 26₁ liegt zwar frei, ist jedoch dem aufprallenden Schüttgut nicht direkt ausgesetzt.

Wird die Verteilerschurre 10 jetzt aus der senkrechten Position in die waagerechte Position der Figur 2B geschwenkt, entleert sich die Rückhaltetasche 38 teilweise in den Restbereich der Rückhaltekammer 40 und bedeckt somit einen grösseren Teilbereich der äusseren Fläche 32 der Querlamelle 26₁. Ein kleiner Teilbereich der inneren Fläche 34 der Querlamelle 26₂ liegt jetzt frei, was jedoch keine negativen Auswirkungen hat, da in dieser Position diese Fläche 34 dem aufprallenden Schüttgut nicht direkt ausgesetzt ist. Strömt Schüttgut nach, füllt sich die Rückhaltekammer 40 vollständig.

In Bezug auf die Auslegung der Rückhaltekammern 40 und Rückhaltetaschen ist anzumerken, dass bei waagerechter Stellung der Verteilerschurre 10 der Schüttgut-Inhalt der Rückhaltetaschen 38 (gemessen bei vertikaler Stellung der Schurre 10) zumindest ausreichen muss um eine schützende Anfangsüberdeckung der waagerechten Oberfläche 24 zu erzielen. Es ist jedoch von Vorteil wenn, wie in Figur 2A gezeigt, bei vertikaler Stellung der Schurre 10 die Oberfläche 24 schon ganz mit Schüttgut bedeckt ist.

In der Figur 2C weist die Schurre 10 einen Neigungswinkel auf der leicht grösser als der Böschungswinkel des Schüttguts ist. Wird der Schüttgutfluss gestoppt bleibt die Rückhaltekammer fast ganz gefüllt. Nur ein kleiner Teilbereich der äusseren Fläche 32 liegt frei. Es ist anzumerken, dass das in Figur 2C gezeigte Schüttgutvolumen eine quasi ruhende Gleitfläche für das nachfliessende Schüttgut ausbildet. Aus dieser Gleitfläche ragen ausschliesslich die Oberkanten 30 der Querlamellen 26 heraus. Dies hat den zusätzlichen Vorteil, dass im Aufprallbereich gute Gleitbedingungen vorherrschen, was eine gute Bündelung des Schüttstrahls bewirkt.

In den Rückhaltekammern 40 sind vorteilhaft Längslamellen 42 derart angeordnet, dass sie jede einzelne Rückhaltekammer 40 in mehrere Kammern unterteilen. Diese Längslamellen 42 dienen einerseits zur Aussteifung der Querlamellen 26. Andererseits erreicht man ein gleichmässigeres Auffüllen der Rüchhaltekammern 40 besonders in den seitlichen Bereichen der Schurre 10,10'. In diesen seitlichen Bereichen sind daher die Unterteilungen der Rückhaltekammer 40 enger ausgeführt als im unteren Bereich der Schurre 10. Es ist anzumerken, dass die Längslamellen 42 vorteilhaft eine niedrigere Höhe als die Querlamellen 26 haben, so dass sie grösstenteils mit Schüttgut bedeckt sind. Ihre Oberkante 44 ist vorteilhaft gegen Verschleiss, zum Beispiel durch Auftragschweissen einer Schicht aus verschleissfestem Hartmaterial verstärkt.

Im Gleitbereich 20 weist die Schurre 10,10' vorteilhaft eine weitgehend glatte Auslauffläche 46 auf. Sie wird durch eine oder mehrere gebogene Platten gebildet. Diese Platten sind vorteilhaft durch Auftragschweissen eines verschleissfesten Materials verstärkt. Sie könnten jedoch auch integral aus einem weitgehend verschleissfesten Werkstoff bestehen. Die Auslauf- oder Gleitfläche 46 ist nicht unmittelbar auf den Schurrenkörper 12 befestigt, sondern mittels Abstandsstegen 48. Die Höhe dieser Abstandsstege 48 ist dabei derart gewählt, dass die Auslauffläche 46 eine durch die Oberkanten 30 der Querlamellen definierte (fiktive) Fliessfläche ohne Übergangssprung verlängert. Dadurch geschieht der Übergang des Schüttguts aus dem Aufprallabschnitt 18 auf die Auslauffläche 46 durch ein kontinuierliches Gleiten, was sich vorteilhaft auf die Standzeit der Auslauffläche 46 auswirkt. Zwischen Auslauffläche 46 und Schurrenkörper 12 werden durch die Abstandsstege 48 Hohlkammern 50 abgegrenzt, welche vorteilhaft mit einem Isoliermaterial 52, zum Beispiel Steinwolle, aufgefüllt sind. Wird die Schurre 10,10' nämlich zur Beschickung eines Ofens eingesetzt, ist ihre Unterseite der Hitzestrahlung voll ausgesetzt und erwärmt sich weitaus stärker als ihre Oberseite. Durch das Isoliermaterial 52 wird die Temperatur der Auslauffläche 46 herabgesetzt, so dass ihre Standzeit erhöht wird. Ein weiterer Vorteil der Hohlkammern 50 besteht darin, dass bei einem Durchbruch 54 der Auslauffläche (siehe Figur 2) die unter dem Durchbruch 54 liegende Hohlkammer 50 sich nach lokaler Zerstörung des Isoliermaterials 52, mit Schüttgut auffüllt. So wird der Schurrenkörper 12 durch das Schüttgut 55 in der Hohlkammer 50 vor Abriebverschleiss geschützt.

In einer anderen (nicht gezeigten) Ausgestaltung der Schurre werden Rückhaltetaschen und Rückhaltekammern auf der gesamten Länge der Schurre vorgesehen. Im sogenannten Gleitabschnitt kann eine glatte Auslauffläche dann direkt auf die obere Kante der Querlamellen aufgebracht werden. Selbst wenn die Auslauffläche weitgehend zerstört ist, bleibt der Schurrenkörper durch die darunter liegenden Rückhaltetaschen und Rückhaltekammern vorzüglich geschützt.

In Figur 3 wird eine Schurre 10' gezeigt, welche sich von der Schurre 10 der Figur 1 nur dadurch unterscheidet, dass die Rückhaltekammern 40 vollständig mit einem Material aufgefüllt sind. Dieses Auffüllmaterial 56 kann eine giessbare, aushärtende Masse (wie zum Beispiel ein Keramikbeton oder ein Wärmeschutzbeton) sein. Sie kann jedoch auch aus Formsteinen bestehen, die in die Rückhaltekammern 40 eingesetzt werden. Durch die besondere Form der Rückhaltekammern 40 können dieselben auch bei einer eingebauten Schurre mittels einer Spritzkanone mit einer aushärtenden Auffüllmasse von oben augefüllt werden.

Der Auffüllwerkstoff kann eine geringere Verschleissfestigkeit als die Oberkanten 30 und äusseren Flächen 32 der Querlamellen 26 aufweisen. Bricht der Auffüllwerkstoff oder zerbröckelt er, hat dies keine wesentlichen Nachteile für die Standzeit der Schurre 10'. Bruchstücke des Auffüllwerkstoffs können nämlich, bedingt durch die Rückhaltetaschen 38, kaum aus den Rückhaltekammern 40 fallen und bilden ein Bett hierin für das nachfallende Schüttgut. Um ein einwandfreies Verteilen der teilweise zerstörten Auffüllung 56 in den Rückhaltekammern 40 zu gewährleisten, ist es deshalb von Vorteil wenn der Auffüllwekstoff weder an der Oberfläche 24 der Schurre 10' noch an der Innenfläche 34 der Querlamellen 26 haftet oder sonstwie befestigt ist. Die Auffüllung 56 erbringt somit eine zusätzliche Erhöhung der Standzeit der Schurre 10', ohne sie dabei, im Vergleich zur Schurre 10 wesentlich zu verteuern. Das vorbeschriebene Auffüllen der Rückhaltekammern 40 hat jedoch auch den zusätzlichen Vorteil, dass so lange die Auffüllung 56 noch teilweise intakt ist, im Aufprallbereich bessere Gleitkonditionen vorherrschen. Dies bewirkt, besonders bei schwach geneigter Schurre, eine bessere Bündelung des Schüttstrahls.

Die erfindungsgemässe Schurre ist vorteilhaft in glockenlosen Begichtungsanlagen von Schacht- und Hochöfen einzusetzen. Sie ist jedoch auch vorteilhaft in andern Öfen oder Anlagen einzusetzen, insbesondere falls der Neigungswinkel der Schurre sehr stark veränderlich ist.

## Patentansprüche

1. Verteilerschurre für Schüttgut, insbesondere für den Einsatz in einer glockenlosen Hochofenbegichtungsanlage, mit einem Aufprallabschnitt (18) und einem Gleitabschnitt (20) für das Schüttgut, wobei auf der Oberfläche der Verteilerschurre Rückhaltekammern (40) ausgebildet sind die sich zum Schutz der Verteilerschurre mit Schüttgut auffüllen können,
dadurch gekennzeichnet,
dass die Verteilerschurre (10,10') im Bereich des Aufprallabschnitts (18) auf ihrer Oberfläche (24) mehrere zur Oberfläche geneigte Querlamellen (26), mit mindestens einer Oberkante (30) und einer Aussenfläche (32) aus einem weitgehend verschleissfestem Material, aufweist, wobei diese Querlamellen (26) in entgegengesetzter Richtung des Schüttgutflusses derart geneigt sind, dass sie zwischen ihrer, der Aussenfläche (32) gegenüberliegenden, Innenfläche (34) und der Oberfläche (24) der Verteilerschurre (10,10') Rückhaltetaschen (38) ausbilden, und
dass je zwei benachbarte Querlamellen (26) zwischen der Aussenfläche (32) der ersten Querlamelle und der Innenfläche der zweiten Querlamelle eine Rückhaltekammer (40) mit einer freien Öffnung zwischen ihren weitgehend verschleissfesten Oberkanten (30) derart ausbilden, dass das Nettovolumen einer Rückhaltetasche (38) mindestens 20% des Netto-Gesamtvolumens der entsprechenden Rückhaltekammer (40) ausmacht, wobei das Nettovolumen einer Rückhaltetasche (38) jeweils dem Teilbereich des Netto-Gesamtvolumens der entsprechenden Rückhaltekammer (40) entspricht, der zwischen der Innenfläche (34) einer Querlamelle (26) und der rechtwinkligen Projektion dieser Innenfläche (34) auf die Oberfläche (24) der Schurre liegt.

2. Verteilerschurre nach Anspruch 1, dadurch gekennzeichnet, dass die Querlamellen (26) einen Neigungswinkel zwischen 40° und 60° zur Oberfläche (24) der Verteilerschurre aufweisen.

3. Verteilerschurre nach Anspruch 1 oder 2, dadurch gekennzeichnet, dass die Rückhaltetaschen (38) derart ausgelegt sind, dass bei senkrechter Schurrenstellung die Oberfläche 24 der Verteilerschurre 10 in den Rückhatekammern 40 mit einer schützenden Schüttgutschicht bedeckt ist.

4. Verteilerschurre nach einem der Ansprüche 1 bis 3, dadurch gekennzeichnet, dass die freien Öffnungen zu den Rückhaltekammern (40) grösser als der grösste, statistisch relevante Korndurchmesser des Schüttguts sind.

5. Verteilerschurre nach einem der Ansprüche 1 bis 4, dadurch gekennzeichnet, dass die Rückhaltekammern (40) zwischen den Querlamellen (26) durch Längslamellen (42) unterteilt sind.

6. Verteilerschurre nach einem der Ansprüche 1 bis 5, dadurch gekennzeichnet, dass die Verteilerschurre zu mindestens im Auslaufbereich des Gleitabschnitts (20) eine weitgehend glatte und verschleissfeste Auslauffläche (46) aufweist.

7. Verteilerschurre nach Anspruch 6, dadurch gekennzeichnet, dass die Auslauffläche (46), eine durch die Oberkanten der Querlamellen (26) definierte (fiktive) Fliessfläche ohne Übergangssprung verlängert.

8. Verteilerschurre nach Anspruch 6 oder 7, dadurch gekennzeichnet, dass zwischen Auslauffläche (46) und einem Schurrenkörper (12) der Verteilerschurre Hohlkammern (50) ausgebildet sind.

9. Verteilerschurre nach Anspruch 8, dadurch gekennzeichnet, dass die Hohlkammern (50) mit einem thermischen Isolationsmaterial (52) aufgefüllt sind.

10. Verteilerschurre nach einem der Ansprüche 1 bis 9, dadurch gekennzeichnet, dass die Rückhaltekammern (40) mit einer giessbaren, aushärtenden Masse aufgefüllt sind.

11. Verteilerschurre nach einem der Ansprüche 1 bis 9, dadurch gekennzeichnet, dass die Rückhaltekammern (40) mit Formsteinen aufgefüllt sind.

## Claims

1. Distribution chute for bulk material, in particular for use in a bell-less blast furnace charging plant, with an impact section (18) and a sliding section (20) for the bulk material, retaining chambers (40), which can fill up with bulk material for protection of the distribution chute, being formed on the surface of the distribution chute,
**characterised in**
that the distribution chute (10, 10') has several transverse bars (26) inclined to the surface with at least a top edge (30) and an outer surface (32) made from a largely wear-resistant material in the area of the impact section (18) on its surface (24), these transverse bars (26) being inclined in the opposite direction to the bulk material flow in such a way that they form retaining recesses (38) between their inner surface (34) opposite the outer surface (32) and the surface (24) of the distribution chute (10, 10') and
that in each case two adjacent transverse bars (26) form between the outer surface (32) of the first transverse bar and the inner surface of the second transverse bar a retaining chamber (40) with a free opening between their largely wear-resistant top edges (30) in such a way that the net volume of a retaining recess (38) accounts for at least 20% of the net total volume of the corresponding retaining chamber (40), wherein the net volume of a retaining recess (38) corresponds to the partial area of the net total volume of the corresponding retaining chamber (40), which lies between the inner surface (34) of a transverse bar (26) and the projection of this inner surface (34) at right angles to the surface (24) of the chute.

2. Distribution chute according to claim 1, characterised in that the transverse bars (26) are inclined at an angle between 40° and 60° to the surface (24) of the distribution chute.

3. Distribution chute according to claim 1 or 2, characterised in that the retaining recesses (38) are designed in such a way that in the case of a vertical chute position the surface (24) of the distributor chute (10) is covered with a protective layer of bulk material in the retaining chambers (40).

4. Distribution chute according to one of claims 1 to 3, characterised in that the free openings to the retaining chambers (40) are larger than the largest, statistically relevant particle diameter of the bulk material.

5. Distribution chute according to one of claims 1 to 4, characterised in that the retaining chambers (40) are subdivided by longitudinal bars (42) between the transverse bars (26).

6. Distribution chute according to one of claims 1 to 5, characterised in that the distribution chute has a largely smooth and wear-resistant discharge surface (46) at least in the discharge area of the sliding section (20).

7. Distribution chute according to claim 6, characterised in that the discharge surface (46) extends a (hypothetical) flow surface defined by the top edges of the transverse bars (26) without a transition step.

8. Distribution chute according to claim 6 or 7, characterised in that hollow chambers (50) are formed between the discharge surface (46) and a chute element (12) of the distribution chute.

9. Distribution chute according to claim 8, characterised in that the hollow chambers (50) are filled with a thermal insulating material (52).

10. Distribution chute according to one of claims 1 to 9, characterised in that the retaining chambers (40) are filled with a pourable, hardening material.

11. Distribution chute according to one of claims 1 to 9, characterised in that the retaining chambers (40) are filled with shaped bricks.

## Revendications

1. Goulotte de distribution pour matières en vrac, en particulier pour l'utilisation dans une installation de chargement sans cloche d'un haut fourneau, comprenant un tronçon d'impact (18) et un tronçon de glissement (20) pour les matières en vrac, sur la surface de la goulotte de distribution étant formées des chambres de retenue (40) susceptibles de se remplir de matières en vrac pour protéger la goulotte de distribution, caractérisée en ce que
la goulotte de distribution (10, 10') présente dans la partie du tronçon d'impact (18), sur sa surface (24), plusieurs lamelles transversales (26) inclinées vers la surface, avec au moins un bord supérieur (30) et une surface extérieure (32), en matériau amplement résistant à l'usure, ces lamelles transversales (26) étant inclinées de telle sorte en sens inverse du courant des matières qu'elles forment des poches de retenue (38) entre leur surface intérieure (34) opposée à la surface extérieure (32) et la surface (24) de la goulotte de distribution (10, 10'), et en ce que
entre la surface extérieure (32) de la première lamelle transversale et la surface intérieure de la deuxième lamelle transversale, chaque fois deux lamelles transversales (26) voisines forment une chambre de retenue (40) avec une ouverture libre entre leurs bords supérieurs (30) amplement résistants à l'usure, de telle sorte que le volume net d'une poche de retenue (38) représente au moins 20 % du volume net total de la chambre de retenue (40) associée, le volume net d'une poche de retenue (38) correspondant à chaque fois à la partie du volume net total de la chambre de retenue (40) associée, qui se situe entre la surface intérieure (34) d'une lamelle transversale (26) et la projection orthogonale de cette surface intérieure (34) sur la surface (24) de la goulotte.

2. Goulotte de distribution selon la revendication 1, caractérisée en ce que les lamelles transversales (26) présentent un angle d'inclinaison de 40 à 60° par rapport à la surface (24) de la goulotte de distribution.

3. Goulotte de distribution selon la revendication 1 ou 2, caractérisée en ce que les poches de retenue (38) sont conçues de telle sorte qu'en position verticale de la goulotte, la surface (24) de la goulotte de distribution (10) dans les chambres de retenue (40) est recouverte d'une couche de protection de matières en vrac.

4. Goulotte de distribution selon l'une des revendications 1 à 3, caractérisée en ce que les ouvertures libres vers les chambres de retenue (40) sont plus grandes que le plus grand diamètre de grain statistiquement pertinent des matières en vrac.

5. Goulotte de distribution selon l'une des revendications 1 à 4, caractérisée en ce que les chambres de retenue (40) entre les lamelles transversales (26) sont subdivisées par des lamelles longitudinales (42).

6. Goulotte de distribution selon l'une des revendications 1 à 5, caractérisée en ce que la goulotte de distribution comporte au moins dans la partie de décharge du tronçon de glissement (20) une surface de décharge (46) amplement lisse et résistante à l'usure.

7. Goulotte de distribution selon la revendication 6, caractérisée en ce que la surface de décharge (46) prolonge sans saut de transition une surface d'écoulement (fictive) définie par les bords supérieurs des lamelles transversales (26).

8. Goulotte de distribution selon la revendication 6 ou 7, caractérisée en ce que des cavités (50) sont formées entre la surface de décharge (46) et un corps de goulotte (12) de la goulotte de distribution.

9. Goulotte de distribution selon la revendication 8, caractérisée en ce que les cavités (50) sont remplies d'une matière d'isolation thermique (52).

10. Goulotte de distribution selon l'une des revendications 1 à 9, caractérisée en ce que les chambres de retenue (40) sont remplies d'une masse coulable et durcissable.

11. Goulotte de distribution selon l'une des revendications 1 à 9, caractérisée en ce que les chambres de retenue (40) sont remplies de briques moulées.
